Europäisches Patentamt

European Patent Office

Office européen des brevets

(19)

(11) Veröffentlichungsnummer: **0 057 914**
**B1**

(12) **EUROPÄISCHE PATENTSCHRIFT**

(45) Veröffentlichungstag der Patentschrift:
**18.12.85**

(21) Anmeldenummer: **82100797.8**

(22) Anmeldetag: **04.02.82**

(51) Int. Cl.⁴: **H 04 N 5/76, G 11 B 27/00,
G 11 B 27/34**

(54) **Videorecorder mit mehreren Bedienungselementen.**

(30) Priorität: **11.02.81 DE 3104843**

(43) Veröffentlichungstag der Anmeldung:
**18.08.82 Patentblatt 82/33**

(45) Bekanntmachung des Hinweises auf die Patenterteilung:
**18.12.85 Patentblatt 85/51**

(84) Benannte Vertragsstaaten:
**AT BE DE FR GB IT SE**

(56) Entgegenhaltungen:
**DE - A - 2 547 360
DE - A - 2 918 846
FR - A - 2 308 279**

**JOURNAL OF THE SOCIETY OF MOTION PICTURE AND TELEVISION ENGINEERS, Band 80, Nr. 8, August 1971 SCARSDALE, N.Y. (US) J.A. FLAHERTY et al.: "New Television Production Techniques" Seiten 605-613
ELECTRONIC APPLICATIONS BULLETIN, Band 33, Nr. 1, Juli 1975 EINDHOVEN (NL) A.C. SMAAL: "TV receivers as domestic video accessories" Seiten 1-11
PROCEEDINGS OF THE CONFERENCE ON COMPUTER GRAPHICS PATTERN RECOGNITION AND DATA STRUCTURE, 14-16. Mai 1975 IEEE, Long Beach (US) M.L. GRIFFITH et al.: "Interactive audio-graphics for speech and image characterization" Seiten 163-169**

(73) Patentinhaber: **Licentia Patent-Verwaltungs-GmbH, Theodor-Stern-Kai 1, D-6000 Frankfurt/Main 70 (DE)**

(72) Erfinder: **Scholz, Gerhard, Ing. grad., Vienenburger Strasse 18, D-3387 Vienenburg 2 (DE)**

(56) Entgegenhaltungen: (Fortsetzung)
**SIEMENS-ZEITSCHRIFT, Band 47, Nr. 3, März 1973 ERLANGEN (DE) K. LANG et al.: "Digitaler vocoder für Sprachausgabe aus Datenverarbeitungsanlagen" Seiten 131-135**

## Beschreibung

Bedienung und Programmierung eines Videorecorders sind mit zunehmender Ausstattung im Laufe der Zeit beträchtlich schwieriger geworden, zumal gegenüber bisherigen Geräten der Unterhaltungselektronik viele neue Bedienungsfunktionen hinzugekommen sind. Oftmals müssen mehrere Bedienungselemente in einer bestimmten Reihenfolge oder sogar gleichzeitig betätigt werden. Bedienung und Programmierung sind dadurch selbst nach längerer Einübung schwierig. Die Hinweise für die richtige Bedienung des Recorders sind zwar in einer Bedienungsanleitung enthalten. Wegen der Vielzahl der Funktionen wie z.B. Senderprogrammierung, Programmierung einer Uhr, Aufzeichnung, Wiedergabe, Zeitraffung, Zeitdehnung, Standbildwiedergabe sind derartige Bedienungsanleitungen sehr umfangreich. Das nötige Wissen über die Bedienung muss im allgemeinen häufig durch neues Lesen der Bedienungsanleitung erneut erworben werden. Die Bedienung derartiger Recorder bereitet in der Praxis selbst fachkundigen Bedienungspersonen oftmals Schwierigkeiten. Das kann u.a. zur Folge haben, dass z.B. eine gewünschte Sendung in Abwesenheit nicht aufgenommen oder eine bereits vorhandene Aufzeichnung in unerwünschter Weise gelöscht wird.

Als Hilfe für die Programmierung ist nach DE-OS 2 918 846 eine Anordnung für Videorecorder bekannt, wonach auf dem Bildschirm eines angeschlossenen Fernsehgerätes zur Wahrung der Übersichtlichkeit eine Auflistung vorprogrammierter Aufnahmedaten unter Angabe der gewünschten Schaltfunktionen gegeben wird.

Der Erfindung liegt die Aufgabe zugrunde, die allgemeine Bedienung eines Videorecorders zu vereinfachen.

Diese Aufgabe wird durch die im Anspruch 1 beschriebene Erfindung gelöst. Eine vorteilhafte Weiterbildung der Erfindung ist in einem abhängigen Anspruch beschrieben.

Bei der Erfindung kann ein mit dem Videorecorder über bekannte Verbindungen sowohl in der Hochfrequenzebene als auch in der Video-Audio-Ebene angeschlossener handelsüblicher Fernsehempfänger dazu ausgenutzt werden, dem Bedienenden in übersichtlicher und verständlicher Form die jeweils notwendigen Hinweise für die Bedienung optisch oder akustisch zu übermitteln. Der Bedienende kann dann zwischen den verschiedenen Möglichkeiten nach seinen Wünschen auswählen. Der Bedienende erhält somit immer einen Leitfaden für die jeweils richtige Bedienung. Die Bedienungsanleitung ist somit im Videorecorder gespeichert und kann daher auch nicht verlorengehen.

Die optisch oder akustisch dargestellten Informationen können unterschiedlicher Art sein. Sie können eine Aufforderung an den Bedienenden enthalten, etwas Bestimmtes zu tun. Sie können eine Bestätigung enthalten, dass die durchgeführte Bedienungsfunktion für den Recorder verständlich war und verwertet wurde. Sie können auch anzeigen, dass offensichtlich eine Fehlbedienung vorliegt und der Bedienende die Bedienung wiederholen sollte.

Die Erfindung kann sich auf alle in der Praxis vorkommenden Arten der Bedienung erstrecken. Die Bedienung kann über einen Ultraschall- oder Infrarot-Fernbedienungsgeber erfolgen oder auch durch das im Recorder enthaltene Tastenfeld, das über LED/LCD-Anzeige kontrolliert werden kann. Besonders vorteilhaft ist die Erfindung auch bei der Programmierung des Videorecorders. Diese besteht aus der Senderprogrammierung mit Sendersuchlauf, Feinabstimmung, direkter Kanalwahl und Speicherung der Abstimminformation. Sie enthält ausserdem die Laufwerk- und Zeitprogrammierung, die Zeit-, Einschalt-Ausschalt-Programmierung mit dem dazu gewünschten Laufwerkmodus wie z.B. Aufnahme und Wiedergabe sowie den Vor- und Rücklauf und auch das Wählspulen. Die Programmierung ermöglicht auch Korrekturen an beliebiger Stelle des Bandes.

Die vom Videorecorder zum Wiedergabegerät die Bedienung erläuternden Steuersignale können einen Text, eine bestimmte Graphik, Tabellen, Bedienungssymbole sowie Sprache und sonstige Tonsignale in codierter und uncodierter Form enthalten.

Das Signal kann vom Videorecorder dem Wiedergabegerät, z.B. einem handelsüblichen Fernsehempfänger, als FBAS-Signal zur sogenannten AV-Buchse zugeführt werden. In diesem Fall wird zusätzlich ein NF-Signal zur Wiedergabe von Sprache und Ton übertragen. Dieses Signal kann in dem Videorecorder in einer Schaltung zur synthetischen Erzeugung von Sprachsignalen gewonnen werden, einem sogenannten Sprachsynthese-Modul. Das Signal kann auch mittels eines modulierten Trägers der Antennenbuchse eines Fernsehempfängers zugeführt werden.

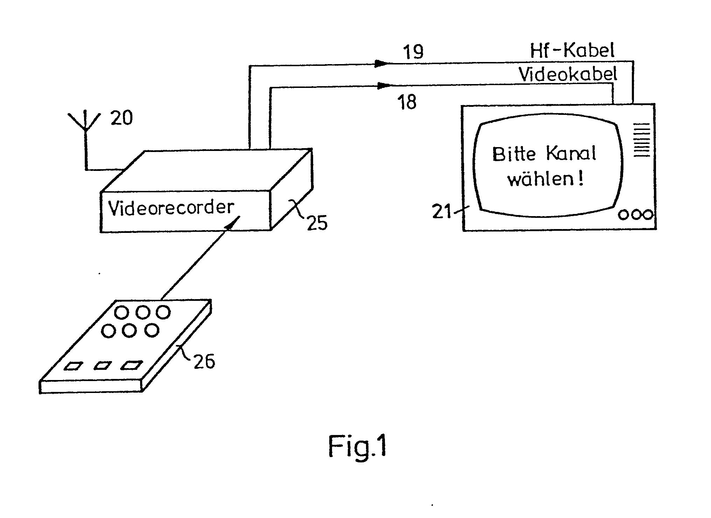

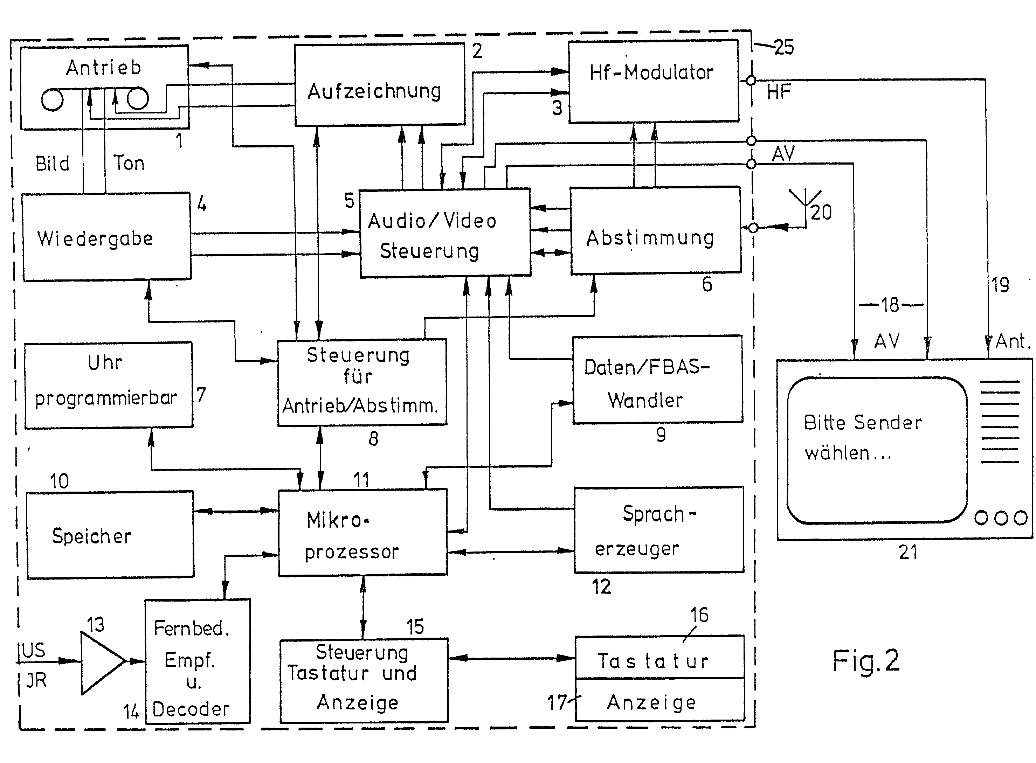

Ein Ausführungsbeispiel der Erfindung wird im folgenden anhand der Zeichnung erläutert. Darin zeigen Figur 1 im Prinzip die Zusammenschaltung zwischen Videorecorder und Fernsehempfänger zur Herstellung des Dialoges und Figur 2 ein Blockschaltbild des Videorecorders, in dem die erfindungsgemässe Lösung verwirklicht ist.

In Figur 1 wird der Videorecorder 25 durch den Fernbedienungsgeber 26 in allen seinen Funktionen fernbedient. Der Videorecorder 25 kann ein HF-Fernseh-Rundfunksignal über die Antenne 20 empfangen, verarbeiten und aufzeichnen. Während dieser Bedienung liefert der Videorecorder 25 Signale zu dem handelsüblichen Fernsehempfänger 21. Diese Signale enthalten Hinweise und Rückmeldungen über die Bedienung und werden auf dem Bildschirm und/oder über den Lautsprecher wiedergegeben. Diese Signalzuführung kann in Form eines mit den Signalen modulierten Trägers über die Leitung 19 zur Antennenbuchse des Fernsehempfängers 21 oder als FBAS-Signal und NF-Tonsignal über die Leitung 18 zu einer AV-Buchse des Fernsehempfängers 21 erfolgen. Im dargestellten Beispiel gibt der Fernsehempfänger 21 dem Bedienenden die Aufforderung «Bitte Kanal wählen». Nach erfolgter Kanalwahl kann dann z.B. eine Bestätigung gegeben werden, dass die Kanalinformation verstanden und ausgewertet wurde und somit der Empfangsteil des Videorecorders auf einen bestimmten Kanal abgestimmt ist.

Anhand der Figur 2 werden nacheinander verschiedene Funktionen beschrieben.

Verarbeitung des HF-Signals

In Figur 2 gelangt das von der Antenne 20 empfangene HF-Signal eines Fernsehsenders zur Abstimmeinheit 6. Von dort kann es direkt wieder auf einen Ausgang des Videorecorders 25 geschaltet werden und über die Leitung 19 zur Antennenbuchse des Fernsehempfängers 21 gelangen. In der Abstimmeinheit 6 wird das empfangene Signal in Bild- und Tonsignale decodiert und über die Steuereinheit 5 und die Aufzeichnungseinheit 2 mit der Antriebseinheit 1 auf dem Videoband aufgezeichnet. Diese Signale können zusätzlich über die Steuereinheit 5 zum AV-Ausgang des Videorecorders 25 und von dort über AV-Leitungen 18 zum Fernsehempfänger 21 geführt werden. Diese Durchschaltung der empfangenen Signale zum Fernsehempfänger 21 kann auch ohne Aufzeichnung der Signale auf dem Videoband erfolgen.

Der Mikroprozessor 11 steht in ständigem Datenaustausch mit der im Speicher 10 eingespeicherten Bedienungsanleitung und steuert den Daten/FBAS-Wandler 9 mit Daten, die als FBAS-Signal zur Steuereinheit 5 geleitet werden. Von dort kann dieses Signal zum HF-Modulator 3 und über die Leitung 19 zur Antennenbuchse des Fernsehempfängers 21 gelangen. Das Signal kann auch direkt über die AV-Leitung 18 dem Fernsehempfänger 21 zugeführt werden. Bei diesen Funktionen ist gleichzeitig eine Aufzeichnung der Signale über die Aufzeichnungseinheit 2 und die Antriebseinheit 1 möglich.

Spracherzeugung

Die Erzeugung von Sprachsignalen geschieht folgendermassen. Der Mikroprozessor 11 bedient den Spracherzeuger 12 mit Daten, die als NF-Signal zur Steuereinheit 5 gelangen. Diese können zusätzlich allein und/oder zusammen mit dem FBAS-Signal des Wandlers 9, das von der Steuereinheit 5 entsprechend geschaltet wird, über die AV-Leitung 18 zum Fernsehempfänger 21 übertragen werden. Die Daten können auch über den HF-Modulator 25 und die Leitung 19 der Antennenbuchse des Fernsehempfängers 21 zugeführt werden. Zusätzlich kann das Signal über die Aufzeichnungseinheit 2 und die Antriebseinheit 1 auf dem Videoband aufgezeichnet werden.

Wiedergabemöglichkeiten

Über die Wiedergabeeinheit 4 wird das AV-Signal von der Antriebseinheit 1 über die Steuerungseinheit 5 zum AV-Ausgang und von dort über die AV-Leitung 18 dem Fernsehempfänger 21 zugeführt. Das Signal kann ebenso zum HF-Modulator 3 gelangen und von dort als modulierter Träger über die Leitung 19 dem Fernsehempfänger 21 zugeführt werden.

Bedienungsmöglichkeiten

Die Bedienung des Videorecorders 25 kann über die Tastatur 16 am Videorecorder erfolgen. Die Abfrage erfolgt über die Steuereinheit 15 für die Tastatur, von der ein Datenaustausch mit dem Mikroprozessor 11 und damit auch mit der im Speicher 10 eingespeicherten Bedienungsanleitung erfolgt. Die Anzeige der bedienten Tasten und der dadurch erwünschten Resultate erfolgt über die Steuerungseinheit 15, die vom Mikroprozessor 11 bedient wird, mittels einer Anzeigeeinheit 17 in LED/LCD-Ausführung.

Die Bedienung des Videorecorders 25 kann auch von dem in Fig. 1 dargestellten Fernbedienungsgeber 26 über Ultraschall (US) oder Infrarot (IR) erfolgen. Diese Signale werden vom Vorverstärker 13 empfangen und verstärkt und im Fernbedienungsgeber und -Decoder 14 in digitale Signale umgewandelt. Diese Signale werden dann vom Mikroprozessor 11 zur weiteren Verarbeitung übernommen.

Die jeweils bedienten Tasten und die dadurch erwünschten Resultate werden vom Mikroprozessor 11 in Form von Daten zum Wandler 9 und/oder Spracherzeuger 12 geleitet. Von deren Ausgängen werden sie zur Steuereinheit 5 geschaltet und über den AV-Ausgang und die Leitungen 18 dem Fernsehempfänger 21 zugeführt. Diese Daten können zusätzlich über die Steuerungseinheit 5, die Aufzeichnungseinheit 2 und die Antriebseinheit 1 auf dem Videoband aufgezeichnet werden.

Die Steuerungseinheit 8 dient zur Steuerung von Aufnahme, Wiedergabe, Laufwerksfunktionen sowie Ansteuerung der Abstimmeinheit 6. Die Steuerungseinheit 8 verbindet den Mikroprozessor 11 mit der Wiedergabeeinheit 4, der Aufzeichnungseinheit 2 und der Abstimmeinheit 6. Sie dient zur Entlastung des Mikroprozessors 11. Der Mikroprozessor 11 gibt Bedienungsbefehle an die Steuerungseinheit 8. Von dort werden sie an die angeschlossenen Module weitergeleitet. Verschiedene Signale wie z.B. «Bandende», «Wählspulen beendet», «Bandanfang» und ähnliches sendet die Antriebseinheit 1 an die Steuerungseinheit 8, die diese Signale an den Mikroprozessor 11 weitergibt, wo sie dann weiterverarbeitet werden.

Programmierbare Uhr

Die programmierbare Uhr 7 zum selbsttätigen Einschalten von Funktionen der Antriebseinheit 1 wird von einem eigenen Quarz als Zeitnormal betrieben. Durch eine spezielle Schaltung ist es möglich, auch bei Netzausfall mit geringerer Leistungsaufnahme weiterzulaufen. Die Uhr 7 ist programmierbar in Uhrzeit, Datum sowie Schaltzeiten.

**Patentansprüche**

1. Videorecorder mit mehreren Bedienungselementen, die vom Bedienenden entsprechend einer Bedienungsanleitung zu betätigen sind, sowie mit Signalgeneratoren für Steuersignale, die auf einem angeschlossenen Fernseh-Wiedergabegerät Anzeigen über den Bedienungszustand des Recorders bewirken, dadurch gekennzeichnet, dass in dem Recorder (25) die Bedienungsanleitung gespeichert ist und von einem Mikroprozessor (11) über einen Daten/FBAS-Wandler (9) die Bedienung erläuternde Steuersignale erzeugt werden.

2. Recorder nach Anspruch 1, dadurch gekennzeichnet, dass er für die, die Bedienung erläuternde Steuersignale eine Schaltung (12) zur synthetischen Erzeugung von Sprachsignalen enthält.

## Claims

1. Radio recorder having several operational elements which are activated by the operator in response to an operating instruction and having also signal generators for control signals which give rise to visual indications concerning the operational condition of the recorder on an attached television-reproducing apparatus, characterized in that the operating instruction is stored in the recorder (25) and the control signals which indicate the operation are derived from a micro processor (11) by way of a data/FBAS-selector (9).

2. Recorder according to Claim 1, characterized in that it contains a circuit (12) for receiving the control signals which indicate the operation, which circuit is provided for the synthetic derivation of speech signals.

## Revendications

1. Magnétoscope comportant plusieurs éléments de manipulation, qui doivent être actionnés par un utilisateur en correspondance avec une instruction de manipulation, ainsi que des générateurs de signaux de commande qui fournissent à un appareil récepteur de télévision raccordé des indications sur la condition de manipulation du magnétoscope, caractérisé en ce que l'instruction de manipulation est mémorisée dans le magnétoscope (25) et les signaux de commande expliquant la manipulation sont produits par un microprocesseur (11) par l'intermédiaire d'un convertisseur données/FBAS (9).

2. Magnétoscope selon la revendication 1, caractérisé en ce qu'il contient, pour les signaux de commande expliquant la manipulation, un circuit (12) de synthèse de signaux vocaux.

Fig.1

Fig.2